(19) Europäisches Patentamt
European Patent Office
Office européen des brevets

(11) EP 3 628 388 A1

(12) EUROPEAN PATENT APPLICATION

(43) Date of publication:
01.04.2020 Bulletin 2020/14

(51) Int Cl.:
B01D 35/143 (2006.01)  B01D 46/00 (2006.01)
B01D 46/46 (2006.01)  B60H 1/00 (2006.01)

(21) Application number: 18196997.3

(22) Date of filing: 26.09.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Valeo Systemes Thermiques
78322 Le Mesnil Saint-Denis Cedex (FR)

(72) Inventors:
• DE PELSEMAEKER, Georges
78322 LE MESNIL SAINT DENIS CEDEX (FR)
• CLEMARON, Laetitia
78322 LE MESNIL SAINT-DENIS CEDEX (FR)

(74) Representative: Metz, Gaëlle
Valeo Systèmes Thermiques
8, rue Louis Lormand
CS 80517 La Verrière
78322 Le Mesnil Saint Denis Cedex (FR)

(54) **A COMPUTER IMPLEMENTED METHOD AND A SYSTEM FOR ESTIMATION OF FILTER CLOGGING**

(57) A computer-implemented method for estimation of filter clogging in a vehicle air quality system, comprising steps of: obtaining outside pollution data, indicative of pollution level outside the vehicle's cabin; obtaining vehicle parameters data, indicative of vehicle operation; estimating weight of the filter using the obtained data; matching the estimated weight with a predefined clogging level; outputting the filter clogging level.

441

FILTER MAINTENANCE

Filter reference
Supreme

Filter efficiency
28%

Change your filter
To ensure maximum protection
for your health

Order

Fig. 3

EP 3 628 388 A1

**Description**

**FIELD OF THE INVENTION**

The invention relates to a computer implemented method and a system for controlling vehicle cabin air quality. In particular, the invention relates to estimation of filter clogging in the vehicle cabin air quality system.

**BACKGROUND OF THE INVENTION**

Air pollution is a serious concern for people because of its harmful effects to health - both in physical and psychological sense. Passengers travelling in vehicles are especially at risk, as the vehicles are part of traffic existing in urbanized areas, which tend to have higher concentration of air pollution and higher levels of pollutant gases and particles.

One way of remedying this disadvantageous situation is development of cabin air quality systems in order to prevent or limit exposure of vehicle passengers to polluted air. In particular, such systems comprise a filter for the air which is introduced into the cabin. Such filters should be replaced relatively often, because the normal operation leads to their gradual clogging. This deteriorates their operation to the disadvantage of the passengers. Manufacturers suggest replacing the filters either periodically, e.g. once or twice a year, or according to distance travelled by the vehicle, e.g. each 13000km. Such guidance is however not optimal, as the filter can become clogged prior to the scheduled maintenance, for instance in highly polluted areas. Similarly, it can happen that during maintenance it is discovered that the filter is in satisfactory condition and could be utilized for a longer period, for instance if the vehicle travels predominantly in areas of very low pollution.

Pollution levels are monitored by government agencies and private entities. The measurements are often provided in form of so called pollution maps. For example, a layer of visually represented information is added to a classic map, so that pollution concentration within a specific area or region can be determined and evaluated. Such maps usually have low time-resolution, which means that the information is updated relatively rarely, for example once an hour or once a day. Pollution map data is obtained for example by measuring pollution with a number of measuring stations or pollution measurement devices of a fixed position.

Further, vehicles can be equipped with pollution sensors and be adapted to provide pollution level values based on real-time and/or aggregated measurements, be it inside the vehicle cabin or outside of the vehicle, in its immediate vicinity.

It would be advantageous to provide a method and a system which would allow for estimating the clogging of filters, so that a timely servicing can be performed when it is really needed.

**SUMMARY OF THE INVENTION**

The object of the invention is, among others, a computer-implemented method for estimation of filter clogging in a vehicle air quality system, comprising steps of: obtaining outside pollution data, indicative of pollution level outside the vehicle's cabin; obtaining vehicle parameters data, indicative of vehicle operation; estimating weight of the filter using the obtained data; matching the estimated weight with a predefined clogging level; outputting the filter clogging level.

Preferably, the method comprises a step of calibrating the system, in which the estimated filters weight is compared with a measured filters weight.

Preferably, the outside pollution data comprise values measured by vehicles pollution sensors.

Preferably, the outside pollution data comprise values obtained from pollution map data.

Preferably, the method comprises a step of obtaining cabin pollution data, indicative of pollution level inside the vehicle's cabin.

Preferably, the vehicle parameters data comprises vehicle air quality system parameters.

Preferably, the vehicle air quality system parameters are selected from a group comprising: air mass flow through HVAC, recirculation rate of air mass flow, filter parameters, concentration/separation of the cabin.

Preferably, the filter parameters comprise filter separation efficiency and/or active area of the filter.

The object of the invention is also a system for estimation of filter clogging in a vehicle air quality system, comprising: communication means configured to obtain outside pollution data, indicative of pollution levels within a defined area in which a vehicle is located, and navigation data, representative of geographical position of the vehicle; control means configured to obtain vehicle parameters data, indicative of vehicle operation, estimate weight of the filter using the obtained data and to match the estimated weight with a predefined clogging level; output means configured to execute the determined action.

Preferably, the system further comprises pollution sensing means adapted to be mounted on a vehicle, comprising a pollution sensor, configured to provide sensor measurement pollution data.

Preferably, the control means are adapted to compare estimated filter weight with a measured filters weight.

Preferably, the communication means are adapted to provide internet connection for the system, in particular to cloud computing services.

Preferably, the communication means are adapted to communicate with other systems according to the invention and exchange data.

The object of the invention is also a computer readable storage medium storing a program of instructions executable by a machine to perform a method as described above.

**BRIEF DESCRITPTION OF DRAWINGS**

Examples of the invention will be apparent from and described in detail with reference to the accompanying drawings, in which:

Fig. 1 shows a method according to the invention;

Fig. 2 shows a system according to the invention;

Fig. 3 shows an example of output means for the system.

**DETAILED DESCRIPTION OF EMBODIMENTS**

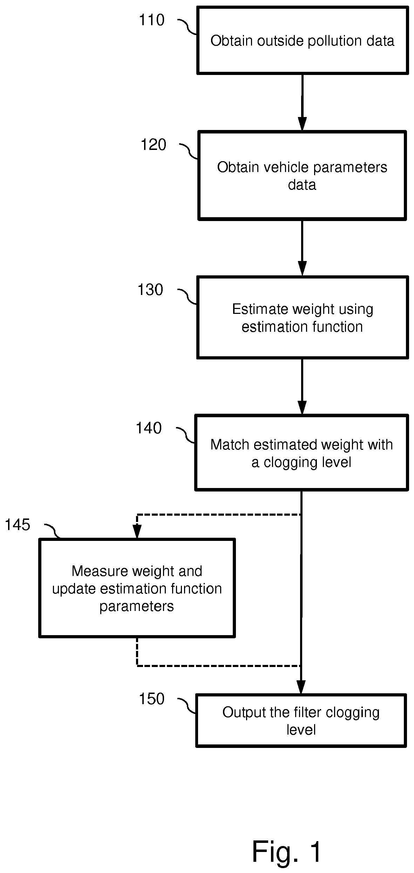

Fig. 1 shows a flowchart presenting the method according to the invention.

Firstly, the method comprises obtaining 110 outside pollution data, indicative of pollution level outside the vehicle's cabin. The outside pollution data can be obtained from a data provider, and be indicative of pollution levels within a defined area in which a vehicle is located. The perimeter of the area is defined based on existing conditions, and the requirements of the system. The outside pollution data can be a pollution map data, which is indicative of air pollution levels within the specified area. Such pollution map data can comprise information on particulate matter levels, carbon monoxide, sulfur oxides, nitrogen oxides, ozone, spread over a defined geographical area. It can also relate to AQI (*Air Quality Index*) value calculated for the specified area. The outside pollution data may also comprise values measured by vehicles pollution sensors.

Optionally, the method can comprise a step of obtaining cabin pollution data, indicative of pollution level inside the vehicle's cabin.

In the next step, the method comprises obtaining 120 vehicle parameters data, indicative of vehicle operation. In particular, the vehicle parameters data may comprise vehicle air quality system parameters. The vehicle air quality system parameters may be selected from a group comprising: air mass flow through HVAC, recirculation rate of air mass flow, filter parameters, separation of the cabin. By separation of the cabin it is meant the ratio between pollutants entering the cabin and pollutants leaving the cabin back into the recycling air flow. The filter parameters may comprise filter separation efficiency and/or active area of the filter. In other words, the filter separation efficiency and the active area of the filter may be combined into a single parameter.

In the next step, the method comprises estimating 130 weight of the filter using the obtained data. The estimation function can associate the clogging of the filter with the weight of the filter. Thus, the estimated weight of the filter will be indicative of its clogging level. The estimation function can take into account the outside pollution data and the vehicle parameters data. In general, the formula can be presented as:

$$Clogging = f(AQIout\,;AQIin\,;Mair;\%reci\,;\mu_{filter};S_{filter};Cabin\ filtration)$$

where: *AQIout* is pollution level outside, either measured by sensor or obtained from pollution data provider; *AQIin* is pollution level inside the cabin, measured by sensor; *Mair* is air mass flow through HVAC; *%reci* is recirculation rate of air mass flow; $\mu_{filter}$ is filter separation efficiency; $S_{filter}$ is active area of filter; *Cabin filtration* is concentration/ separation of the cabin.

It is to be noted that although AQIout and AQIin relate to AQI values, they may as well relate to PM1, PM2.5, PM10, NOx, CO, CO2, SO2, Ozone, VOC (*Volatile Organic Compounds*), allergens and others.

Initially, if the amount of collected data is not sufficient, the method can use a simplified formula:

$$Clogging = f(km\,;time\,;AQIout)$$

where *km* is kilometers travelled since last filter replacement or first installation, *time* is for example number of days since last filter replacement or first installation, and *AQIout* is pollution level outside, either measured by sensor or obtained from pollution data provider, or both.

The coefficients necessary to estimate filter weight based on obtained data (for example the abovementioned parameters) can be evaluated and updated during a step of calibrating 145 the system, in which the estimated filters weight is compared with a measured filters weight.

In general:

$$Clogging = \sum_i \alpha_i . X_i + \sum_{i,j} \beta_{i,j} . X_i . X_j$$

where *Xi* and *Xj* are above described parameters, while *αi* and *βij* are identified by filter weighing. By taking into account filter parameters, vehicle parameters and pollution data we can model clogging of the filter by functions with parameters which can be identified by filter weighing at each car review. By multiplying data, the clogging function will be more and more accurate for each combination of filter and vehicle type.

In the next step, the method comprises matching 140 the estimated weight with a predefined clogging level. The clogging levels can be stored in the system and be associated with a determined weight, for example with particular weight ranges.

In the next step, the method comprises outputting 150 the filter clogging level. The outputting 150 can be carried out directly into the vehicle air quality system so that it can adapt its operation parameters. Further or alternatively, the clogging level can be outputted to visual indication components of the vehicle, so that the vehicle user can be informed about the need to replace the filter.

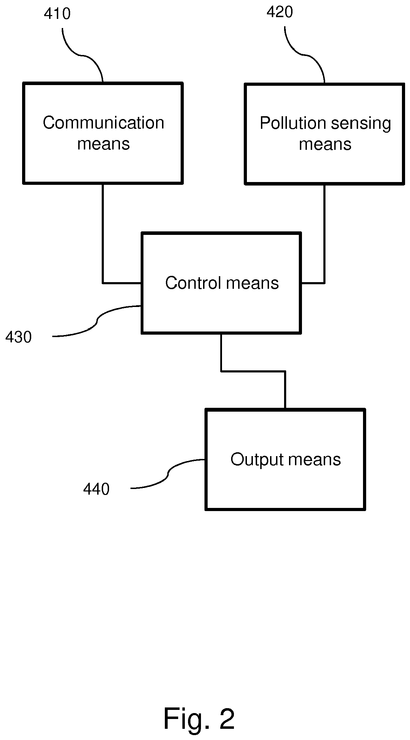

Fig. 2 presents a schematic representation of a system according to invention. The system comprises communication means 410, control means 430 and output means 440. Additionally, the system can comprise pollution sensing means 420.

The communication means 410 are adapted to receive and send wireless signals, such as navigation signals, for example GPS signals or the like. In particular, the communication means 410 are adapted to obtain outside pollution data, indicative of pollution levels within a defined area in which a vehicle is located, and navigation data, representative of geographical position of the vehicle. The communication means 410 can be adapted to provide internet connection to the system, in particular to cloud computing services. All received data is supplied to and from control means 430. The communication means 410 may be also adapted to communicate with other vehicles comprising system according to the invention, for example via internet or by other means, so that data can be exchanged.

The pollution sensing means 420 comprise pollution sensors which measure air pollution levels outside the vehicle, in its immediate vicinity. Further, the pollution sensing means 420 can comprise pollution sensors adapted to measure pollution level inside vehicles cabin.

The control means 430 are adapted to receive data from pollution sensing means 420 as well as from the communication means 410. Additionally, the control means 430 are adapted to obtain vehicle parameters data, indicative of vehicle operation. For example, the control means 430 are adapted to obtain the vehicle parameters data relating to vehicle air quality system components. The vehicle air quality system parameters may be selected from a group comprising: air mass flow through HVAC, recirculation rate of air mass flow, filter parameters, separation of the cabin. The filter parameters may comprise filter separation efficiency and/or active area of the filter.

The control means 430 are also adapted to estimate weight of the filter using the obtained data and to match the estimated weight with a predefined clogging level. The control means 440 can comprise memory for storing the obtained data, as well as the estimate function data and predefined clogging levels associated with estimated weight. The memory can also store calibration parameters and instructions.

The output means 440 can be carried out in form of a direct link to the vehicle air quality system, enabling incorporation of the clogging level into its operation. Further, the output means 440 can in form of visual input/output device. Filter clogging may be directly linked with filter efficiency, and outputted as such. The user or the system may thus be prompted with a warning on low filter efficiency and suggestion for replacement. The suggestion to the user may be linked with an option for ordering the replacement directly from replacements parts provider.

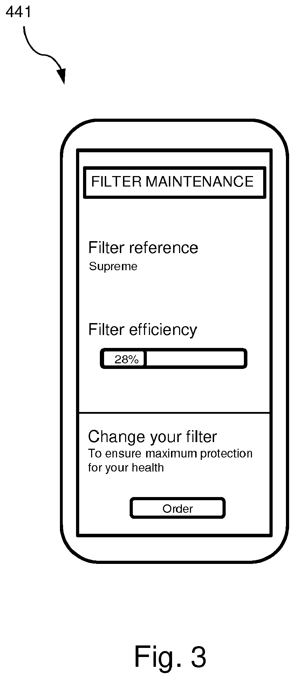

Fig. 3 shows an example of output means for the system. In particular, it presents a visual input/output device in form of mobile phone 441. The information on filter, such as its reference name and efficiency level are presented to the user. Additionally, because the efficiency (i.e. clogging) is at dangerous level, an option to order the replacement filter is presented.

Another outputted information can be a count of days until the filter becomes too clogged. This count can change dynamically depending on the outside pollution and on the clogging estimation.

The invention allows to avoid the necessity of measuring the air pressure drop with differential pressure sensors to determine clogging level of the filter. The overall cost of the vehicle with the vehicle air quality system can thus be reduced.

It is envisaged that the communication means are also adapted to obtain supplemental data from other vehicles with the system according to the invention. This might be the case especially for vehicles with identical or similar configuration, identical or similar age, and/or operating in the same or similar area, subject to the same or similar pollution levels. To make the system more robust, the data collection may be done on the same family of vehicle equipped with the same filter type. Thanks to multiplication of data for same filter for the same car model in the same area, which allows to obtain similar pollution exposures, it becomes possible to improve the adjustment between filter weight estimation and the measured filter weight. The $\alpha_{i,j}$ and $\beta_{i,j}$ are not only adjusted thanks to the few weight measurements done on the filter at each car review for a single car, but they can be adjusted based on collective weighing of the fleet. The collective measurements become the data base of formula with $\alpha_{i,j}$ and $\beta_{i,j}$ for each filter of each car model.

It is understood that embodiments of the present invention can be carried out in form of hardware, software or a combination of both. Any such software can be stored in the form of a volatile or non-volatile storage, for example a storage like a ROM, whether erasable or rewritable or not, or in the form of memory such as, for example RAM, memory chips, device or integrated circuits or an optically or magnetically readable medium such as, for example, a CD, DVD, magnetic disk or magnetic tape. It is understood that the storage devices and storage media are embodiments of machine-readable storage that are suitable for storing program or programs that, when executed, implement embodiments of the present invention. Accordingly, embodiments provide a program comprising code for implementing a system or method as described and a machine readable storage storing such a program. Further, embodiments of the present invention may be conveyed electronically via any medium such as a communication signal carried over a wired or wireless connection and embodiments suitably encompass the same.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

### Claims

1. A computer-implemented method for estimation of filter clogging in a vehicle air quality system, comprising steps of:

   - obtaining 110 outside pollution data, indicative of pollution level outside the vehicle's cabin;
   - obtaining 120 vehicle parameters data, indicative of vehicle operation;
   - estimating 130 weight of the filter using the obtained data;
   - matching 140 the estimated weight with a predefined clogging level;
   - outputting 150 the filter clogging level.

2. A method according to claim 1, wherein it comprises a step of calibrating 145 the system, in which the estimated filters weight is compared with a measured filters weight.

3. A method according to any preceding claim, wherein the outside pollution data comprise values measured by vehicles pollution sensors.

4. A method according to any preceding claim, wherein the outside pollution data comprise values obtained from pollution map data.

5. A method according to any preceding claim, wherein it comprises a step of obtaining cabin pollution data, indicative of pollution level inside the vehicle's cabin.

6. A method according to any preceding claim, wherein the vehicle parameters data comprises vehicle air quality system parameters.

7. A method according to claim 6, wherein the vehicle air quality system parameters are selected from a group comprising: air mass flow through HVAC, recirculation rate of air mass flow, filter parameters, separation of the cabin.

8. A method according to claim 7, wherein the filter parameters comprise filter separation efficiency and/or active area of the filter.

9. A system for estimation of filter clogging in a vehicle air quality system, comprising:

- communication means 410 configured to obtain outside pollution data, indicative of pollution levels within a defined area in which a vehicle is located, and navigation data, representative of geographical position of the vehicle;
- control means 430 configured to obtain vehicle parameters data, indicative of vehicle operation, estimate weight of the filter using the obtained data and to match the estimated weight with a predefined clogging level;
- output means 440 configured to execute the determined action.

10. A system according to claim 9, further comprising pollution sensing means 420 adapted to be mounted on a vehicle, comprising a pollution sensor, configured to provide sensor measurement pollution data.

11. A system according to any preceding claim, wherein the control means 430 are adapted to compare estimated filter weight with a measured filters weight.

12. A system according to any of claims 9 to 11, wherein the communication means 410 are adapted to provide internet connection for the system, in particular to cloud computing services.

13. A system according to any of claims 9 to 12, wherein the communication means 410 are adapted to communicate with other systems according to the invention and exchange data.

14. A computer readable storage medium storing a program of instructions executable by a machine to perform a method according to any of claims 1-8.

110 ⌇ Obtain outside pollution data

120 ⌇ Obtain vehicle parameters data

130 ⌇ Estimate weight using estimation function

140 ⌇ Match estimated weight with a clogging level

145 ⌇ Measure weight and update estimation function parameters

150 ⌇ Output the filter clogging level

Fig. 1

Fig. 2

441

FILTER MAINTENANCE

Filter reference
Supreme

Filter efficiency

28%

Change your filter
To ensure maximum protection
for your health

Order

Fig. 3

Europäisches
Patentamt

European
Patent Office

Office européen
des brevets

# EUROPEAN SEARCH REPORT

Application Number

EP 18 19 6997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/146637 A1 (CAMFIL AB [SE]) 31 August 2017 (2017-08-31) | 1,3, 5-10,14 | INV. B01D35/143 |
| Y | * claims 1-3 * | 2,4, 11-13 | B01D46/00 B01D46/46 B60H1/00 |
| Y | US 2014/208942 A1 (SCIPIO ALSTON ILFORD [US] ET AL) 31 July 2014 (2014-07-31) * claim 1 * | 2,11 | |
| Y | US 2011/246022 A1 (BAI SUE [US]) 6 October 2011 (2011-10-06) * figure 4 * | 4,12,13 | |
| A | US 2017/361259 A1 (FOX ANDREW R [US] ET AL) 21 December 2017 (2017-12-21) * claim 1; figure 4 * | 1-14 | |
| A | KR 101 875 029 B1 (FMTELECOM CO LTD [KR]) 6 July 2018 (2018-07-06) * claim 1 * | 1-14 | |

TECHNICAL FIELDS
SEARCHED      (IPC)

B01D
B60H

The present search report has been drawn up for all claims

| Place of search | Date of completion of the search | Examiner |
|---|---|---|
| Munich | 28 February 2019 | Skowronski, Maik |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 19 6997

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2019

| Patent document cited in search report | | Publication date | Patent family member(s) | | Publication date |
|---|---|---|---|---|---|
| WO 2017146637 | A1 | 31-08-2017 | BR 112018017295 | A2 | 02-01-2019 |
| | | | CA 3013201 | A1 | 31-08-2017 |
| | | | CN 108779925 | A | 09-11-2018 |
| | | | EP 3420281 | A1 | 02-01-2019 |
| | | | SE 1650244 | A1 | 25-08-2017 |
| | | | US 2019041079 | A1 | 07-02-2019 |
| | | | WO 2017146637 | A1 | 31-08-2017 |
| US 2014208942 | A1 | 31-07-2014 | NONE | | |
| US 2011246022 | A1 | 06-10-2011 | NONE | | |
| US 2017361259 | A1 | 21-12-2017 | CA 2969381 | A1 | 09-06-2016 |
| | | | CN 107003019 | A | 01-08-2017 |
| | | | JP 2018501457 | A | 18-01-2018 |
| | | | US 2017361259 | A1 | 21-12-2017 |
| | | | WO 2016089688 | A1 | 09-06-2016 |
| KR 101875029 | B1 | 06-07-2018 | NONE | | |

EPO FORM P0459

For more details about this annex : see Official Journal of the European Patent Office, No. 12/82